**Europäisches Patentamt**

**European Patent Office**

**Office européen des brevets**

(11) Veröffentlichungsnummer: **0 128 258**
**A1**

# EUROPÄISCHE PATENTANMELDUNG

(21) Anmeldenummer: **83830116.6**

(22) Anmeldetag: **09.06.83**

(51) Int. Cl.³: **A 23 G 9/04,** A 23 G 9/28,
B 30 B 1/38, A 21 C 11/18,
A 23 P 1/00

(43) Veröffentlichungstag der Anmeldung: **19.12.84**
**Patentblatt 84/51**

(84) Benannte Vertragsstaaten: **AT BE DE FR GB IT**

(71) Anmelder: **BOVO S.a.s. del F.lli Pillon Claudio e Paolo &
C., Via S. Antonino, 274, I-31100 Treviso (IT)**

(72) Erfinder: **Pillon, Bruno, Via S. Antonino 274,
I-31100 Treviso (IT)**

(74) Vertreter: **Sneider, Massimo, Lenzi & C. Via Lucania, 13,
I-00187 Roma (IT)**

(54) **Maschine für die Formgebung von Nahrungsmitteln.**

(57) Eine Maschine für die Formgebung von Nahrungsmitteln, bei der ein Fluid komprimiert und in diesem komprimierten Zustand eingesandt wird um einen Kolben (18) zu betätigen, welcher den zu gestaltenden Nährstoff unmittelbar oder mittelbar zusammendrückt. Die Maschine setzt sich im wesentlichen aus einem Luftkompressor (2), einem Rückschlagventil (59), einem Pressluftbehälter (3), einem Zylinder (20), einem Kolben oder Stössel (18), einem Becherträger (15) und einem Becher (14), dessen Boden ziehdüsenartig ausgebildet ist, zusammen, wobei der Becher (14) mit Mitteln (12) versehen ist, welche ein Zustimmungsventil (11) für den Durchgang der komprimierten Luft vom Behälter (3) zum oberen Kopf (22) des Zylinders (20) und umgekehrt unmittelbar oder mittelbar betätigen.

Anmelder :

BOVO S.a.s. dei F.lli Pillon Claudio e Paolo & C.,

Treviso (ITALIEN)

"Maschine für die Formgebung von Nahrungsmitteln"

Beschreibung

Es sind für die Auspressung von Agrumen und ähnlichem Obst und für die Formgebung von Teigwaren , Speiseeisgemischen und Fleischprodukten geeignete Maschinen bekannt , so wie nach dem Stand der Technik auch Maschinen bekannt sind , welche geeignet sind nach verschiedensten Kriterien Wurzelknollen und Ähnliches zu schneiden . Die für diese Instrumentengattung angewandte Technik beruht im allgemeinen auf der Inanspruchnahme eines Motors , welcher eine Schnecke antreibt , die an ihrem der Funktion entsprechend angepassten Endteil die Komprimierung der in einer Tasse enthaltenen Erzeugnisse und den Austritt derselben aus der Base entweder im Saftzustand oder nach besonderen Schablonierungen verursacht . Die durch den chemisch-physikalischen Aufbau der Produkte selbst oder auch durch deren Temperatur bestimmte unterschiedliche Konsistenz des Teiges oder der Nahrungsgemische ist hinsichtlich des Betriebes der bekannten Maschinen fast belanglos , zumal dieselben nicht mit geeigneten Geräten oder Instrumenten ausgerüstet sind , um die Arbeitsgeschwindigkeit der Schnecke mit
der Beschaffenheit und den veränderlichen Zuständen
der zu behandelnden Erzeugnisse zu vergleichen , d.h.
in Beziehung zu bringen .

Die vorstehende Anführung ist umso augenfälliger ,
wenn man die Verwendung von Maschinen für die Formgebung der Speiseeispaste , z.B. zur Erhaltung von Speiseeis-Spaghetti in Betracht zieht : wenn sich nämlich das
Gemisch , wie es sich häufig ereignen kann , nicht auf
der idealen Temperatur befindet , z.B. wenn es gefroren
ist , so ist die Maschine bestrebt mit den entsprechenden
Auswirkungen festzusitzen ; wenn die Temperatur hingegen
zu hoch ist , so wird der gewünschte Effekt nicht erzielt und das Erzeugnis tritt ohne der Schablonierung
oder Gestaltung aus , welche beabsichtigt ist demselben erteilt zu werden .

Man richtete sich deshalb die Notwendigkeit zu untersuchen eine Lösung aufzufinden , welche es gestattet
die Arbeitsgeschwindigkeit der Maschine beliebig und
gemäss den praktischen Erfordernissen zu verändern , indem der Druck nach der Beschaffenheit und der Konsistenz
der Erzeugnisse bemessen wird .

Ein Gegenstand der vorliegenden Erfindung ist eine
Maschine , bei der ein komprimiertes Fluid für die Extrusion eines Nahrungsmittelerzeugnisses , insbesondere von Speiseeis , durch eine Ziehdüse oder Zugmatrize hindurch verwendet wird , derart , um dem Stoff selbst eine gewünschte besondere Form zu verleihen .

Ein weiterer Gegenstand der Erfindung ist eine Maschine , welche den vorstehend dargelegten Erfindunsgedanken nutzbar macht . Durch die Annahme eines Ventilsystems ist diese Maschine in der Lage eine bequeme Regelung der Betriebsgrenzen und somit die maximale Einsatzgefügigkeit in Bezug auf die Eigenschaften der zu verarbeitenden Erzeugnisse zu gestatten .

Die wesentlichen Bestandteile der in Frage stehenden Maschine sind : ein Zylinder , welcher in seinem oberen Teil einen Kompressor und in seinem unterhalb gelegenen Teil einen Pressfluidbehälter (Luft) enthält ; ein zweiter Block , bei dem ein Zylinder vorgesehen ist , innerhalb dem eine Stange wirkt , an deren Base ein Kolben arbeitet , welcher unmittelbar auf die in einem Becher oder einer Ziehdüse enthaltenen Paste einwirkt , wobei Becher oder Ziehdüse in einem Becherträger aufgenommen und abgestützt wird , mit dem der Becher selbst z.B. mittels eines Bajonettverschlusses verbunden ist .

Weitere Mittel , wie z.B. eine bei der Aufstellung des Bechers oder der Ziehdüse gesteuerte Zustimmungsstange , setzen den Ventil- und Verbindungskomplex für

- 4 - 0128258

den Betrieb der Maschine in Tätigkeit .

Die Erfindung ist aus der nachstehenden ausführlichen Beschreibung der bevorzugten Ausführungsform anhand der anliegenden Zeichnungen besser verständlich . In den Zeichnungen selbst zeigen :

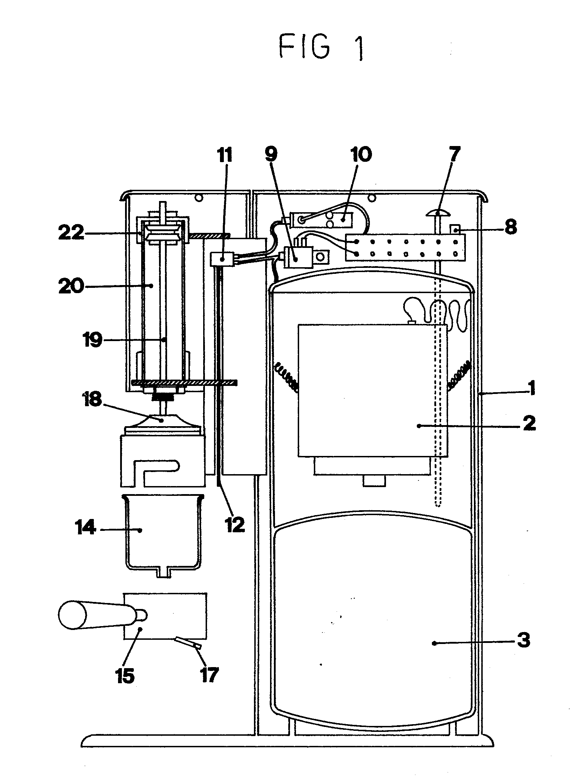

Fig. 1 eine Ansicht im Aufriss der Gesamtheit der erfindungsgemässen Maschine , welche schematisch im Teilschnitt in Seitenansicht gezeigt ist ;

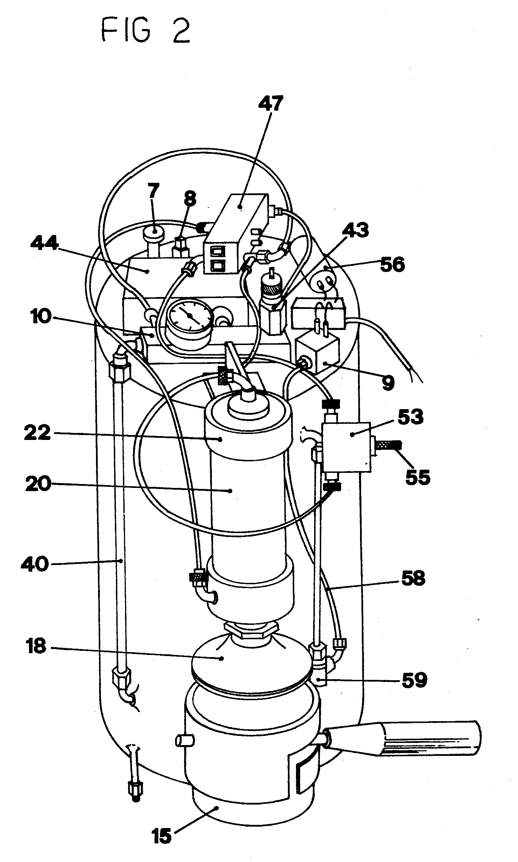

Fig. 2 schematisch di Anordnung des Ventilkomplexes und die dazugehörigen Verbindungen .

Bezugnehmend auf diese Zeichnungen und wie vorstehend bereits angedeutet sind die grundlegenden Elemente der Maschine ein Kompressor 2 , ein Pressfluidbehälter 3 , insbesondere für Pressluft , ein Zylinder 20 , in den die Pressluft vom Behälter 3 gelangen kann und in dem ein in einen Stössel 18 auslaufender Schaft 19 gelagert ist , welcher an seiner Umfangslinie mit einer O-Dichtung versehen ist , ein Becherträger 15 , welcher für einen Bajonettverschluss mit Langschlitzen versehen ist , und ein Becher 14 , welcher in der Lage ist in den Becherträger 15 einzurasten .

Der Becherträger 15 ist mit einem schräggestellten Flügel 17 versehen , welcher , wenn der Becher 14 in dessen Gehäuse untergebracht und in den vorgenannten Bajonettverschluss eingerastet ist , auf eine Zustimmungs-

0128258

stange 12 für den Durchgang der komprimierten Luft einwirkt .

In der Tat , gemäss dem grundlegenden Kreislauf der
vorliegenden Erfindung , gelangt die über die Rohrleitung 40 vom Behälter 3 kommende Pressluft zu einem mit
dem Mikroventil 11 in Verbindung stehenden Kollektor
10 , welches von der vorgenannten Zustimmungsstange 12
betätigt wird . Über die Rohrleitung 10 gelangt die komprimierte Luft auch zu einem Fünfwegeventil 47 , welches die Funktion hat die komprimierte Luft je nach der
Stellung des Mikroventils 11 zu verteilen .

In der Tat , wenn sich das Mikroventil 11 in der
Ruhelage befindet , also wenn es von der Zustimmungsstange 12 nicht gesteuert worden ist , kehrt die vom Behälter 3 kommende Pressluft über das Fünfwegeventil 47
zum Behälter selbst zurück . Umgekehrt , wenn das Mikroventil 11 durch die Aufstellung des den zu gestaltenden
Nährstoffbringenden Bechers 14 betätigt worden ist , gelangt die komprimierte Luft über einen Kreislauf zu
einem Regler 53 , u.zw. zu einem Regelventil 53 , welches infolge der Handsteuerung 55 die Luftmenge einstellt , welche durchfliesst und zum oberen Zylinderkopf 22 des Zylinders 20 gelangt . Infolge der Ankunft
der Luft innerhalb des Zylinderkopfes 22 verstellt sich
die im Zylinder 20 gelagerte Stange 19 nach unten und

0128258

verschiebt während dieses Ausschlages den Kolben oder Stössel 18 , welcher den im Becher 14 enthaltenen Nährstoff komprimiert . Der Becher 14 ist dabei an seinem Boden mit einer Ziehdüse versehen , derart , um dem Nährstoff , welcher durch dieselbe hindurch gebracht wird , die gewünschte Form , z.B. die Form von Spaghetti verleihen zu können . Ist der Kolben 18 an seinem Endanschlag angelangt , so wird der Becher 14 vom Bajonettverschluss ausgerastet und der schräggestellte Flügel 17 entfernt sich von der Zustimmungsstange 12 . Daraus ergibt sich , dass sich das Mikroventil 11 wieder schliesst und infolge dieser Schliessung sich der Kreislauf der Luft vom Pressluftbehälter 3 ändert und die Luft in den Behälter 3 selbst zurückgeführt wird .

Wie angedeutet , sieht die erfindungsgemässe Maschine einen Kompressor 2 vor , welcher über ein zweckdienliches Rückschlagventil 59 die komprimierte Luft in den Behälter 3 bringt . Das Ventil 59 hat die Aufgabe eine Rückkehr von Pressluft zum Kompressor zu vermeiden . Der Behälter 3 ist zugleich mit einem Druckwächter 44 versehen , welcher den Druck im Behälter 3 aufrechterhält , sowie weiters mit einem Sicherheitsventil 43 , welches eingreift und den Drucküberschuss ablaufen lässt , wenn der Druck aus einer beliebigen Störung die vorbestimmte Maximalgrenze überschreiten sollte . Zum Schutze und zur grösseren Sicherheit des Motors ist entsprechend ein Elektroventil 9 vorgesehen , welches die Funktionstüchtigkeit des Ganzen gewährleistet . Der Verdichter , d.h. der Kompressor , ist natürlich regelmässig geschmiert , und über eine Sonde 7 ist es möglich den Ölstand zu kontrollieren . Anderseits ist naheliegenderweise auch ein Filter 8 vorgesehen , welcher die Luft filtert , die komprimiert werden wird .

Die verschiedenen Sicherheitsvorrichtungen sind natürlich anpassbar und sind in der Maschine vorgesehen . Eine wichtige Funktion wird vom Regler 53 erfüllt , dessen Stellung die Luftdurchsatzänderung bestimmt , und folglich , während er in völlig geöffneter Stellung den Durchgang der maximalen Luftmenge beim vorgesehenen Druck gestattet , in einer Zwischenstellung diesen Durchgang drosselt bis ihn zu annullieren durch seine Schliessstellung .

Wie gesagt , wenn der Becher 14 entfernt wird , so verursacht dessen Entfernung das Gleiten nach unten der Zustimmungsstange 12 und damit die Zuflussunterbrechung der Luft in den Zylinder 20 . Es ist somit einleuchtend , dass das vorgenannte Elektroventil 9 über einen zweckdienlichen Anschluss am Rückschlagventil 59 und mit dem Zylinderkopf des Kompressors verbunden ist . Dieses Elektroventil hat die Aufgabe den Körper des Kompressors von der Luft zu entleeren : in der Tat , wenn der Kompressor die Luft in den Behälter 3 gedrückt hat , verbleibt ein Druckrückstand im Körper des Kompressors 2 , ein Rückstand , welcher beseitigt werden muss , um dem Motor das Maximum der Leistung mit dem Minimum der Reibung zu ermöglichen . Die auf diesem Wege rückgewonnene Luft wird in den Behälter über den Anschluss 58 und das entsprechende Rückschlagventil 59 eingeführt . Ein Kondensator 56 stellt ein weiteres Sicherheitselement für den einwandfreien Betrieb des Motors dar . Die Maschine ist mit einem Manometer und anderen Kontrollinstrumenten vervollständigt , und ist in einer Karosserie 1 eingeschlossen , welche dieser eine besondere ästhetische Form verleiht .

Die Erfindung wurde vorstehend nur beispielsweise in nicht zu beschränkender Form beschrieben und erläutert , wobei zu vergegenwärtigen ist , dass die einzelnen Bestandteile und die einzelnen Überwachungsausrüstungen nicht ausführlich genannt worden sind , zumal dieselben dem Fachmann auf diesem Gebiet wohl bekannt und somit nicht Gegenstand der vorliegenden Erfindung sind', welche in den nachstehenden Patentansprüchen zum Vorschein kommt .

Anmelder :                                        0128258

BOVO S.a.s. dei F.lli Pillon Claudio e Paolo & C.,

Treviso (ITALIEN)

_____

"Maschine für die Formgebung von Nahrungsmitteln"
_____

Patentansprüche
_____

1.)Maschine für die Formgebung von Nahrungsmitteln , dadurch gekennzeichnet , dass ein Fluid , z.B. Luft , komprimiert und in diesem Zustand eingesandt wird um einen Kolben (18) zu betätigen , welcher den zu gestaltenden Nährstoff unmittelbar oder mittelbar zusammendrückt , weshalb der Nährstoff selbst diese Gestaltung erfährt ohne dass der Kolben (18) von mechanischen Mitteln betätigt worden wäre , aber indem seine Verdichtungsgeschwindigkeit in Abhängigkeit von den chemisch-physikalischen  Eigenschaften des Nährstoffes selbst geregelt ist .

2.)Den Erfindungsgedanken gemäss Anspruch 1 nutzbar machende Maschine , dadurch gekennzeichnet , dass sie im wesentlichen aus einem Luftkompressor (2) , aus einem Pressluftbehälter (3) , aus einem Zylinder (20) für die Betätigung mittels Pressluft eines Kolbens oder Stössels (18) , aus einem Becherträger (15) und aus einem Becher (14) , dessen Boden ziehdüsenartig ausgebildet ist , zusammengesetzt ist .

- 2 -   0128258

3.) Maschine , nach Anspruch 2 , dadurch gekennzeichnet , dass der Becher (14) an der Aussenseite mit Mitteln (17) versehen ist , welche ein Ventil (11) unmittelbar oder mittelbar betätigen , derart um für den
Durchgang der komprimierten Luft vom Behälter (3) zum
Zylinder (20) die Zustimmung zu geben oder nicht .

4.) Maschine , nach einem oder mehreren der vorstehenden Ansprüche , dadurch gekennzeichnet , dass ein Fünfwegeventil (47) auf Zustimmung des Mikroventils (11) gemäss Anspruch 3 den Durchgang der Luft zum oberen Zylinderkopf (22) des Zylinders (20) gemäss Anspruch 2 oder
den Durchgang der Luft zum unteren Zylinderkopf des Zylinders selbst oder auch die Rückkehr der Luft gestattet ohne dass diese durch den mehrmals genannten Zylinder (20) gehen würde .

5.) Maschine , nach einem oder mehreren der vorstehenden Ansprüche , dadurch gekennzeichnet , dass der Luftkompressor (2) unter Durck stehende Luft in einen Pressluftbehälter (3) über ein Rückschlagventil (59) sendet ,
wobei weiters ein Druckwächter (44) und ein Sicherheitsventil (43) vorgesehen ist um einer ungewünschten Druckanhäufung vorzubeugen , indem der Motor des Kompressors
auch von einem Kondensator (56) geschützt wird .

6.) Maschine für die Formgebung von Nahrungsmitteln ,
nach einem oder mehreren der vorstehenden Ansprüche ,

- 3 -     0128258

bei welcher die Annahme von Überwachungs- und Sicherheitsmitteln für den Betrieb der Maschine selbst vorgesehen ist .

FIG 1

FIG 2

# EUROPÄISCHER RECHERCHENBERICHT

**Europäisches Patentamt**

012 82 58

Nummer der Anmeldung

EP 83 83 0116

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 385 337 (B.M. DEI FRATELLI BRAVO, GENESIO, FRANCESCO E GIUSEPPE S.N.C.) * Figur 1; Ansprüche 1-7 * | 6 | A 23 G 9/04<br>A 23 G 9/28<br>B 30 B 1/38<br>A 21 C 11/18<br>A 23 P 1/00 |
| | --- | | |
| Y | US-A-4 360 332 (M.U.D. CYIN) * Figuren 1,2,5,6; Spalte 2, Zeile 19; Spalte 3, Zeilen 7-16 * | 2,6 | |
| | --- | | |
| Y | DE-C- 556 425 (M. MACK u.a.) * Figuren 1,2,4; Anspruch 1; Seite 1, Zeilen 41-68 * | 1 | |
| | --- | | |
| Y | DE-A-1 577 169 (ERICH HAFNER) * Figuren 1,2; Seite 5, Zeile 17 - Seite 6, Zeile 12 * | 1 | |
| | --- | | **RECHERCHIERTE SACHGEBIETE (Int. Cl. ³)** |
| Y | FR-A- 592 879 (R. GOSSELIN) * Figur 1; Zusammenfassung * | 1 | |
| | --- | | A 23 G |
| Y | US-A-1 724 545 (C. AMBRETTE) * Figur 1; Ansprüche 1-3 * | 1,2,4, 6 | B 30 B<br>A 21 C |
| | --- | | |
| Y | US-A-1 700 670 (J. DE FRANCISCI) * Figur 1 * | 1,2,4, 6 | |
| | --- | | |
| Y | FR-A- 972 981 (T. HOPE) * Seiten 1,2; Zusammenfassung * | 1 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 28-03-1984 | GUYON R.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82

Europäisches
Patentamt

**EUROPÄISCHER RECHERCHENBERICHT**

0128258

Nummer der Anmeldung

EP 83 83 0116

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FLUID POWER INERNATIONAL, Band 37, Nr. 43, Februar 1972, Seite 7 <br> * Seite 7, Spalte 3 * <br><br> --- | 1 | |
| A | US-A-3 897 184 (J. WOODBURN u.a.) <br><br> --- | | |
| A | US-A-1 607 880 (J.E. DUNGAN) <br><br> --- | | |
| A | DE-A-3 037 926 (OBERHOFER) <br><br> --- | | |
| A | EP-A-0 069 566 (LEONARD BARRY GRIFFITHS u.a.) <br><br> --- | | RECHERCHIERTE SACHGEBIETE (Int. Cl. ³) |
| A | US-A-4 340 343 (UGO MANCINI) <br><br> ----- | | |

Der vorliegende Recherchenbericht wurde für alle Patentansprüche erstellt.

| Recherchenort <br> DEN HAAG | Abschlußdatum der Recherche <br> 28-03-1984 | Prüfer <br> GUYON R.H. |
|---|---|---|